# EUROPEAN PATENT APPLICATION

(11) **EP 3 506 075 A1**
(43) Date of publication of application: **03.07.2019**
(21) Application number: 18209000.1
(22) Date of filing: 28.11.2018
(51) Int. Cl.: G06F 3/06, G06F 12/10

(54) **MASS STORAGE DEVICE CAPABLE OF FINE GRAINED READ AND/OR WRITE OPERATIONS**

(30) Priority: 28.12.2017 US 201715857406
(71) Applicant: INTEL Corporation, Santa Clara, CA 95054 (US)
(72) Inventor: KHAN, Jawad B., Portland, OR 97229 (US); TRIKA, Sanjeev N., Portland, OR 97229 (US); LOEWEN, Myron, Berthoud, CO 80513 (US); LI, Peng, Beaverton, OR 97007 (US)
(74) Representative: Rummler, Felix

(57) **Abstract**

A mass storage device controller is described. The controller is to process first and second read requests received at an I/O interface of a mass storage device. The first read request includes a first logical block address. The first read request is to provide a first block stored within non volatile storage media of the mass storage device at the I/O interface. The first block is identified by the first logical block address. The second read request includes a second logical block address and specifies one or more bytes within a second block identified by the second block address and stored within the non volatile storage media. The second read request is to provide the one or more bytes at the I/O interface.

## Description

### Field of the Invention

The field of invention pertains generally to the computing sciences, and, more specifically, to a mass storage device capable of fine grained read and/or write operations.

### Background

Computing system designers are constantly considering ways to improve the design of their systems. "Efficiency" is a respectable measure of system operation, and therefore, system design. In particular, accesses to and/or movements of large amounts of un-needed information within the system are to be avoided to the extent practicable.

### Figures

A better understanding of the present invention can be obtained from the following detailed description in conjunction with the following drawings, in which:
Fig. 1 (prior art) shows a traditional computing system and mass storage device;
Fig. 2 shows an improved computing system with improved mass storage device;
Figs. 3a, 3b and 3c pertain to an improved mass storage device;
Figs. 4a, 4b, 4c, 4d depict operations performed by an improved mass storage device;
Fig. 5 shows a network between a computer and a mass storage device;
Fig. 6 shows an improved method to be operated within a computing system;
Fig. 7 shows a computing system.

### Detailed Description

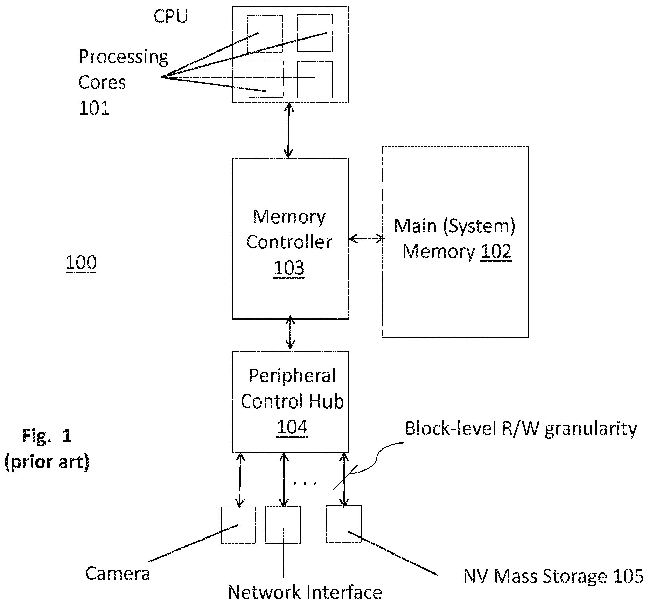

Fig. 1 depicts a traditional computing system 100 that includes a plurality of general purpose processing cores 101, a main memory 102 (also referred to as a system memory), a main memory controller 103, a peripheral control hub 104 and non-volatile mass storage 105. According to the operation of the traditional computing system 100, the general purpose processing cores 101 read the respective program code and corresponding data of one or more software programs from main memory 102 for execution. Data that the software determines is not to be kept in processor register space may be written back to the main memory 102.

Here, the main memory's address space is typically viewed as being broken down into pages. A software program operates by issuing memory read requests for instructions and read/write instructions for/to data on the pages that have been allocated for the software program in main memory 102. Often, a software program's footprint is larger than the number of pages that have been allocated for it in main memory 102. As such, during run-time execution of the software, pages that are not needed or believed by the software to not be imminently needed may be swapped out of main memory 102and stored in non-volatile mass storage 105. Likewise, pages that are needed or believed by the software to be imminently needed and that are not in main memory 102 are called up from mass storage 105 and entered into main memory 102.

Unfortunately, each page can contain a significant amount of information (e.g., 4 kilo-bytes (KB)). Transferring large data amounts to/from mass storage 105 in units of pages stems from a traditional inability of mass storage devices (e.g., hard disk drives, FLASH memory devices, tape drives, etc.) to access information rapidly at small levels of granularity. For instance, in the case of a traditional disk drive, considerable amounts of time are consumed moving a read/write head over an appropriate track on a disk. Once the read/write head is situated in the correct location, large amounts of information can be accessed at relatively high speeds. Thus, by its nature, the performance of a disk drive is optimized if it is asked to read/write large amounts of data at a single track location rather than "hopping" from track to track at slow speeds only to access small amounts of data.

A similar situation exists with FLASH memory devices as same amounts of data have traditionally only been erased together in large blocks, and, moreover, as a replacement for hard disk drives, FLASH memory devices are designed to support read/write accesses in units of large amounts of data (blocks).

Main memory 102, by contrast, is traditionally implemented as a true random access memory such as dynamic random access memory (DRAM), and is capable of accessing data at much finer granularities. Typically, data is physically read/written from/to main memory 102 in cache lines which are much smaller than pages. For instance, traditionally, whereas a single page may be 4096 bytes (4KB) of data, a single cache line may only be, e.g., 64 bytes (64B) of data. Moreover, main memory 102 is typically referred to as being "byte addressable" in that data segments as small as a single byte may be written to and/or read from main memory 102 from the perspective of a processing core 101 that issues memory read/write requests. That is, the processing core 101 may issue a write request that requests only a single byte to be written into main memory 102, and/or, the processing core 101 may issue a read request that requests only a single byte of information.

Thus, traditionally, there is a great disparity between the granularity at which accesses can be made to main memory 102 versus the granularity at which accesses can be made to mass storage 105.

Importantly, computing system designers are recognizing that transferring large amounts of data to/from mass storage 105 may be too inefficient. For instance, consider a scenario where an entire page is called up from mass storage 105 and entered in main memory 102 but only a small amount of information on the page is actually utilized by its software program. Here, not only are large amounts of consumed memory space not being utilized, but also, large amounts of data were moved from mass storage 105 to main memory 102 for essentially no purpose. The presence of unneeded data in main memory 102 and the movement of large amounts of data with no end-purpose can translate into a noticeable power consumption inefficiency of the computer system 100. The problem may be particularly relevant, e.g., in the case of battery powered systems (such as handheld devices (e.g., smartphones) or laptop computers).

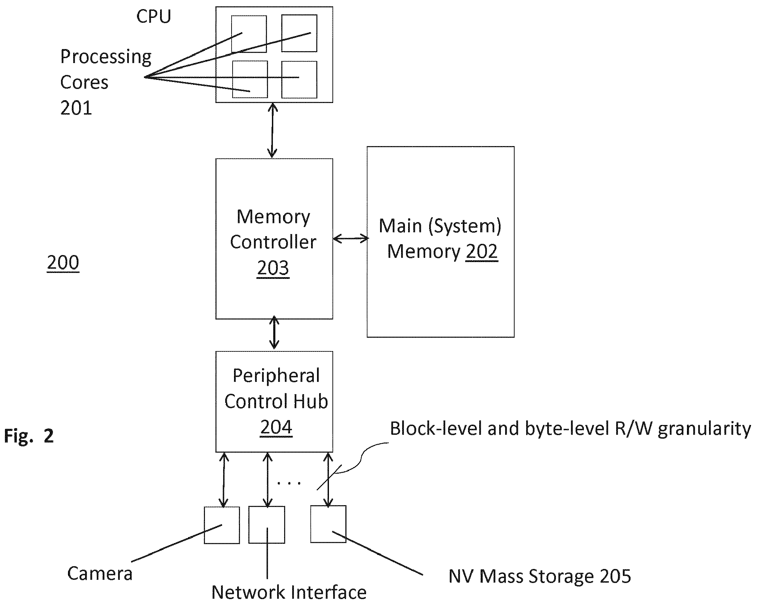

As such, Fig. 2 depicts an improved system, in which device(s) that the non volatile mass storage 205 is composed of are capable of finer grained accesses, e.g., akin to main memory, and is not limited only to larger block based accesses. More specifically, Fig. 2 shows a computing system like the computer system 100 of Fig. 1 except that the mass storage device of Fig. 2 can receive read/write requests for data sizes/granularities that are comparable and/or identical to the data sizes/granularities of main memory 202. For example, according to one embodiment, the mass storage device can process read and/or write requests for only a byte of information (in executing the request, only a single byte is written/read by the mass storage device).

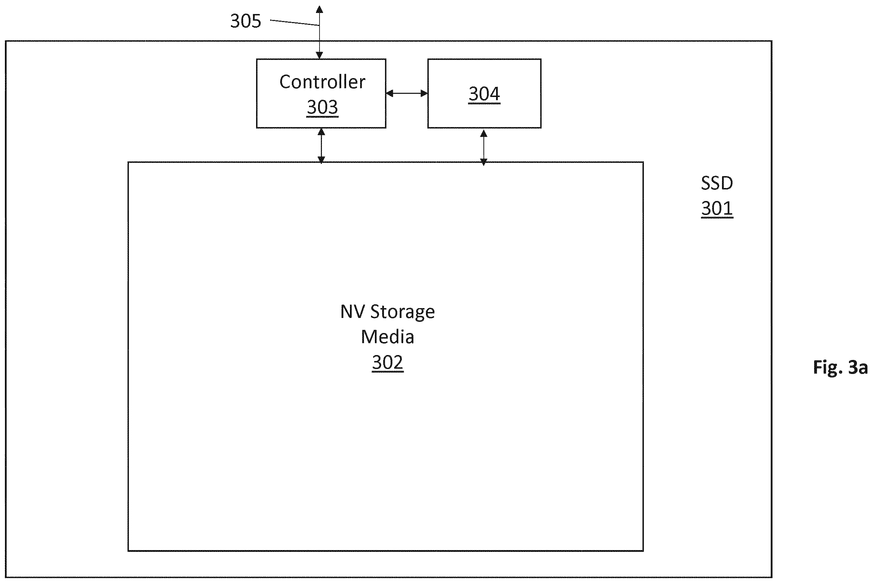

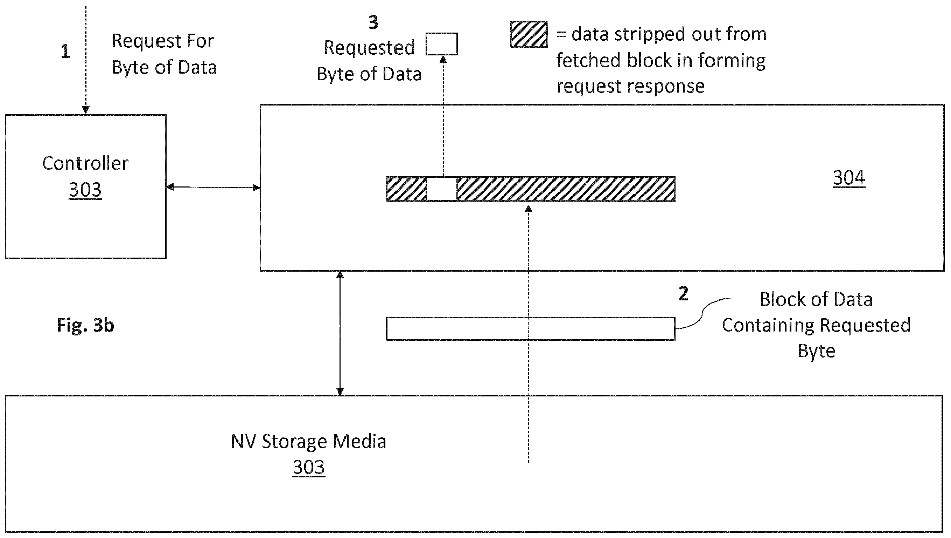

Figs. 3a and 3b pertain to a mass storage device 301, such as a solid state drive (SSD), having non volatile storage media 302 (e.g., one or more (e.g., a stack) of FLASH memory chips) and a controller 303. The controller has associated memory 304, such as a DRAM. The controller 303 may be implemented as dedicated hardwired logic circuitry (e.g., hardwired application specific integrated circuit (ASIC) state machine(s) and supporting circuitry), programmable logic circuitry (e.g., field programmable gate array (FPGA), programmable logic device (PLD)), logic circuitry that is designed to execute program code (e.g., embedded processor, embedded controller, etc.) or any combination of these. In embodiments where at least some portion of the controller 303 is designed to execute program code, the program code is stored in the controller's local memory 304 and executed by the controller therefrom. An I/O interface 305 is coupled to the controller and may be compatible with an industry standard peripheral or mass storage technology interface (e.g., Peripheral Component Interconnect (PCIe), ATA/IDE (Advanced Technology Attachment/Integrated Drive Electronics), Universal Serial Bus (USB), IEEE 1394 ("Firewire"), FiberChannel, etc.).

In various embodiments, consistent with traditional SSD operation, the SSD accesses information at "block" granularities (a page and block may be of same size, or, e.g., one is a multiple of the other). As such, the controller 303 manages a mapping table (also referred to as an address translation table) that maps logical block addresses to physical block addresses. When a host sends a block of data to be written into the SSD 301, the host also appends a block address to the data which is referred to as a logical block address (LBA). The SDD 301 then writes the block of data into the non volatile media 302 and associates, within the mapping table, the data's LBA to the physical location(s) within the SSD where the block's pages of data are stored. The specific physical locations are specified with a physical block address (PBA) that uniquely identifies the one or more die, plane and/or other resources within the SSD 301 where the pages are stored.

Importantly, the controller 303 also supports finer grained data accesses such as, e.g., byte level read operations and/or byte level write operations. In the case of a byte level read operation, referring to Fig. 3b, the SSD 301 receives a read request 1 for, e.g., a byte of information. Here, even if the underlying non volatile storage media 303 natively supports only larger grained block accesses, a block 2 that contains the requested finer grained data is read from the non volatile storage medium and placed in the controller memory 304. Here, the byte level read request also includes an address for the specific byte. The higher ordered bits of the address correspond to an LBA within the controller's address translation table from which the controller can readily access the specific block within the non volatile storage media 302 that contains the requested byte level data. After the block 2 having the targeted byte is read from the mass storage media 304 and is placed in the controller's memory 304, the controller 303 then operates to "strip" large amounts of, or all of, the page's irrelevant (non-requested) data in preparing the response to the request. As such, an item of data that is much smaller than a block (e.g., only the requested byte) is presented at the SSD's I/O output as the read response 3.

Here, the amount of stripped information that is included in the response may be slightly larger than the requested data. For example, the physical layer of the I/O interface may establish a minimum packet payload size that is larger than the smallest granularity at which the SSD can support read/write requests. For example, the SSD may have the ability to support byte level requests but the I/O interface has a minimum packet payload size of eight bytes. In this case, an eight byte chunk that includes the requested byte may be returned in the response 3. The host will then pass at least the requested byte up to the memory controller which will write it into the main memory.

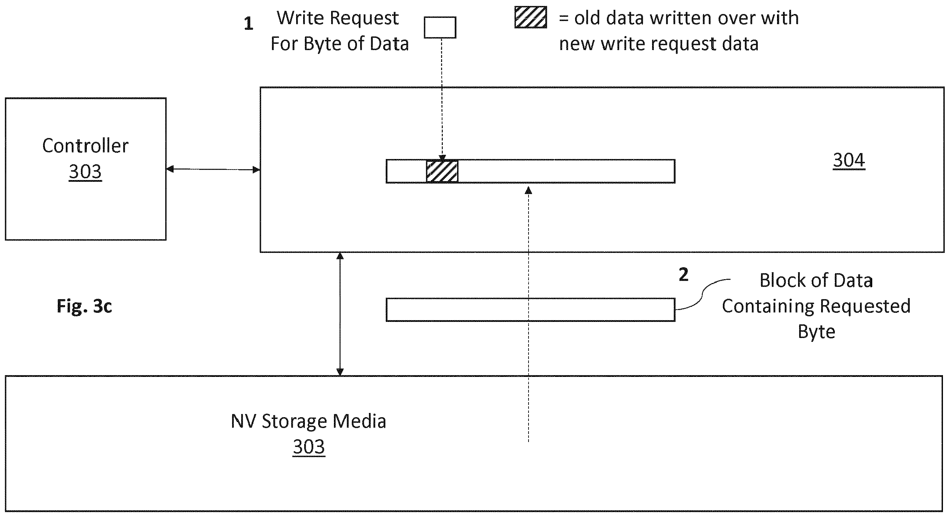

In the case of a byte level write operation, referring to Fig. 3c, the SSD 301 receives a write request 1 for a byte of data. The write request also includes an address for the byte to be written. The higher ordered bits of the address correspond to an LBA within the controller's address translation table from which the controller can readily access the specific block within the non volatile storage media that contains the byte to be written over. The controller reads the block 2 having the byte to be written over from the mass storage media and places it in the controller's memory 304. After the block has been read 2 from the non storage media and written into the controller's memory 304, the controller operates to write over the targeted byte with the new byte that was received in the write request. The controller then writes the entire block with the new, updated byte back into the storage media 302 (not shown in Fig. 3c for illustrative ease). As such, a read-modify-write operation is essentially effected.

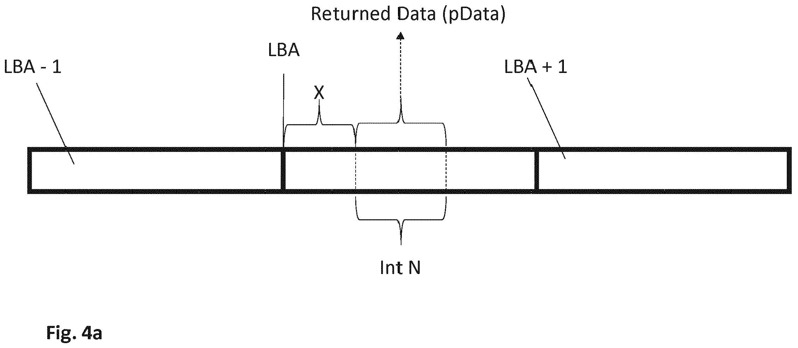

In various embodiments, the device driver software for the SSD 301 is enhanced to accept software commands that support smaller grained non volatile mass storage operations as described above (here device driver software may execute on a general purpose processing core 201 or, potentially, some other processing intelligence in the system). For example, according to one embodiment, the device driver software maintains an application programmer's interface (API) that supports the following "ReadPartial" software command (method call) through the interface:
pData <= ReadPartial(LBA, X, Int N)
where LBA is the logical block address of the block that contains the desired read data, X is an offset from the location of the first byte in the targeted block where the desired data begins and N is the amount of requested data specified in bytes. pData is the returned read data that is written into main memory, or at least provided by the mass storage device in response to the method call. Fig. 4a provides a high level view of the operation. Note that in cases where only a single byte is requested, Int N = 1.

Thus, the ReadPartial operation is capable of providing read amounts in a range of 1 to N bytes and is broader in functionality than only providing a single byte. As discussed above, the actual returned amount may differ than the actual needed amount, e.g., owing to differences between the granularities of what the SSD is capable of and the channel(s) between the SSD and main memory. For example, in the aforementioned example where the physical layer of the I/O supports minimum packet payload sizes that are larger than the minimum granularity that the SSD can perform, the software that invokes the method call may set Int N = the minimum packet payload size.

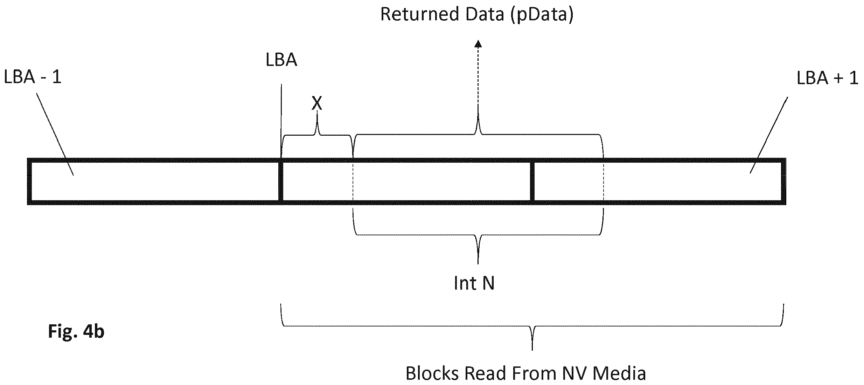

Fig. 4b shows an operation where X specifies an amount of data that extends into the neighboring block having block address LBA+1. In the case where the requested read amount extends into a next LBA, the controller will read both the block at LBA and at LBA+1, place them into controller memory, and extract only the requested information from both blocks. In still yet other embodiments, the total amount of requested data may even exceed the size of one block in which case the partial data of not only one or two blocks may be included in the return but also at least one full block in between the beginning and end portions of the requested data.

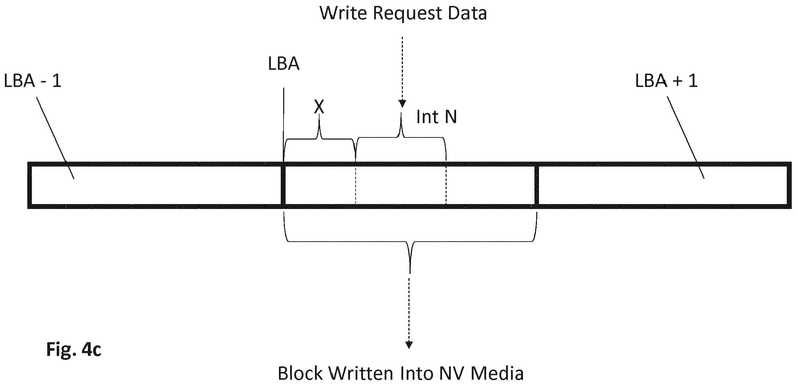

In various embodiments, the device driver's API also supports the following "WritePartial" software command (method call) through the interface:
WritePartial(LBA, X, Int N, pData)
where LBA is the logical block address of the block that contains the data to be written over, X is an offset from the location of the first byte in the targeted block where the data to be written over begins and N is the amount of data to be written specified in bytes. pData is the data to be written. Fig. 4c provides a high level view of the operation. Note that in cases where only a single byte is requested, Int N = 1. Thus, the WritePartial operation is capable of writing amounts of data in a range of 1 to N bytes and is broader in functionality than only writing a single byte.

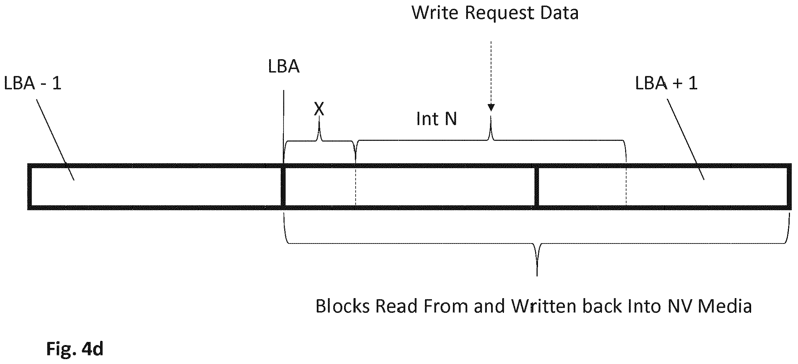

Fig. 4d shows an operation where X specifies an amount of write data that extends into the neighboring block having block address LBA+1. In the case where the write amount extends into a next LBA, the controller will read both the block at LBA and at LBA+1, place them into controller memory, write over the affected information from both blocks and write the updated blocks back into the non volatile media. In still yet other embodiments, the total amount of write data may even exceed the size of one block in which case the partial data of not only one or two blocks may be written over but also at least one full block in between the beginning and end portions of the written to data.

In various embodiments, the aforementioned SSD remains capable of block level accesses in which blocks to be read are specified by LBA and provided by the SSD, and, blocks to be written are provided to the SSD and written over the block having the same LBA within the SSD.

The ability to specify, in a single command, read or write data not only with granularity as to amount of data (e.g., only a single byte) but also as to start point and end point (even if large data amounts are requested, conceivably even larger than a block), corresponds to much more precise usage models and resulting efficiencies within the computing system.

In particular, if only a small amount of data is to be written/read to/from mass storage, only a corresponding small amount of data is passed between the memory controller and peripheral control hub. As compared to traditional approaches, the passing of large amounts of unneeded data is avoided thereby improving the power efficiency of the computing system. If large chunks of information that are not aligned on block boundaries are in need of a write/read operation, then, the specific write/read data (and little if anything else) is passed between the memory controller and the peripheral control hub which, likewise, at least eliminates the possibility of passing large amounts of un-needed data within the system (e.g., in the case where affected data starts near the end of a first block and ends near the beginning of a last block).

In various system implementations, the software that oversees the functionally of an improved SSD as described herein and page management of system memory (e.g., operating system, virtual machine monitor, operating system instance, application software, etc.) does not apply the granularly of the improved operations described herein to a mass storage device until the pages for all data affected by such improved operations are resident in main memory.

That is, for example, when an application needs instructions or data on a page that is not currently resident in main memory, the page is called up from mass storage as per traditional methods. Here, again, a page may be equal in size to a block of data within the SSD, or, one may be a multiple of the other (in the case where a block is a multiple of more than one page, generally, multiple pages are passed between memory and storage as a single unit of transfer). Once the page is resident in main memory, however, the software can begin writing/reading finer grained accesses to data that is on that page into mass storage.

Here, although software is typically executed by accessing information on pages of data in main memory, operations to mass storage for information of pages that are already in main memory can also happen. An example is, e.g., transactional software (e.g., two-phase commit protocol software) in which certain data that has been calculated and is retained in main memory needs to be "committed" to mass storage for, e.g., permanent keeping because of its non volatile characteristic. In this case, data on a page in main memory is written back to mass storage. Here, with the improved operations described herein, if such data is only a small amount (e.g., just a byte) then just the small amount can be written back from main memory to mass storage, whereas, as per traditional operations, the entire page that the data is on needs to be written back from main memory to mass storage.

It is also possible for a reverse scenario in the case of read where, e.g., permanent data (e.g., look-up table data) is written over when being processed from a page in main memory. If the software needs the original data again, it can only fetch it from mass storage. Here, if the data is, e.g., as small as a byte, such data can be called up from mass storage using the improved operations described herein, whereas, according to traditional operation, the data's entire page would need to be called up from mass storage.

For operations that affect multiple pages (e.g., a large write of data that extends from the middle of a first page to the middle of a second page), each of the affected pages should be present in memory in order to use an improved write function to mass storage that only includes the write data itself and not the data of all the pages on which the write data resides. Similarly, in the case of a large read whose read data spans multiple pages, generally, the pages having the affected data should already reside in main memory. However, in the case where a large read includes one or more whole pages in the middle of the requested data amount, only the pages having the beginning and end portions of the requested data should be in memory in order to execute the command. Conceivably, the intervening whole pages in between the pages having the beginning and end portions can be called up initially through the execution of the improved command (they do not need to be main memory as a pre-requisite to execution of the improved read operation).

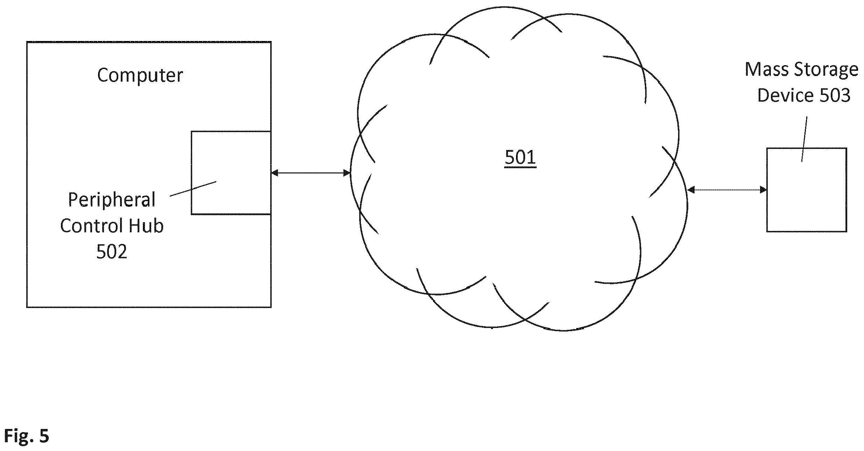

Fig. 5 shows another implementation where a network 501 of some kind exists between the peripheral control hub 502 and the mass storage device 503. Here, although many view PCIe as a network between the hub and the peripherals of a computer that exists within the confines of the computer's package (e.g., within a laptop computer), according to the perspective of Fig. 5, the network 501 can be a much larger network such as a local area network (e.g., an Ethernet network), or even a wide area network (such as a wireless cellular network, the Internet, etc.). In this case, the traffic that is passed over the network 501 is greatly reduced because in many cases only a single, small packet of data containing a small amount of data (e.g., as small as a byte) is passed over the network 501, whereas, the traditional approach would require multiple packets that collectively transport an entire page to be passed over the network.

In other embodiments, rather than postured as new/separate commands that are different, e.g., in input parameter syntax, than legacy commands that support block based accesses, instead, the above described method calls are synergized with legacy operations so that only one command syntax is used for both fine grained and legacy method calls. More specifically, for instance, rather being expressed as a "partial" read, the generic read method call is expressed as:
pData <= Read(LBA, X, Int N)
where, for partial reads, the input parameters LBA, X and Int N are used as described above for PartialRead but for a legacy read command X = 0 and Int N = the block size. Similarly, rather being expressed as "partial" write, the generic write method call is expressed as:
Write(LBA, X, Int N, pData)
where, for partial writes, the input parameters LBA, X and Int N are used as described above for PartialWrite but for a legacy write commands X = 0 and Int N = the block size.

In various embodiments, the aforementioned mass storage device may be fronted, internally or externally, by a mass storage cache ("disk cache"). A cache, as is known in the art, is used to keep frequently accessed blocks in a faster storage medium (such as DRAM) so that the performance of the mass storage device may be observed to be faster than the storage device's underlying, deeper non-volatile mass storage medium. Here, if the cache is large enough for caching frequently accessed blocks, some portion of the cache or some additional smaller extended cache region may be used to cache frequently accessed items of small granularity. For instance, a mere 8B cache can cache up to eight bytes of information that are the frequent target of smaller grained read/write operations (e.g., if the mass storage device frequently receives read/write accesses for eight, different, non-contiguous bytes (as articulated with eight different input parameter sets in their respective method calls) the 8B cache can keep each of these bytes.

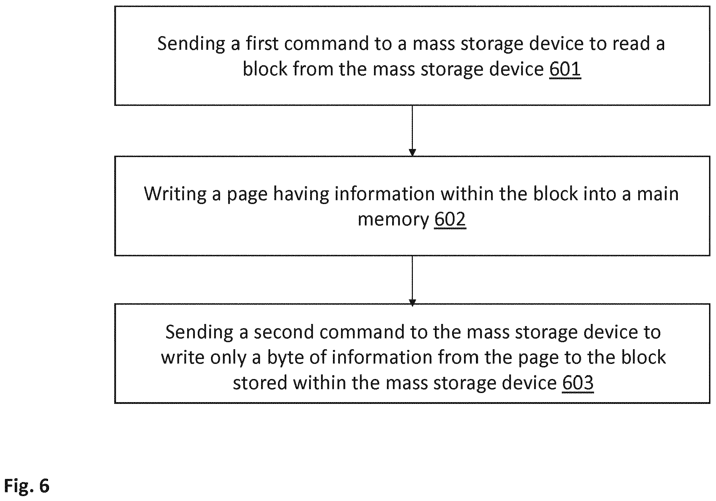

Fig. 6 shows a method described above. The method includes sending 601 a first command to a mass storage device to read a block from the mass storage device. The method also includes writing 602 a page having information within the block into main memory. The method also includes sending 603 a second command to the mass storage device to write only a byte of information from the page to the block stored within the mass storage device.

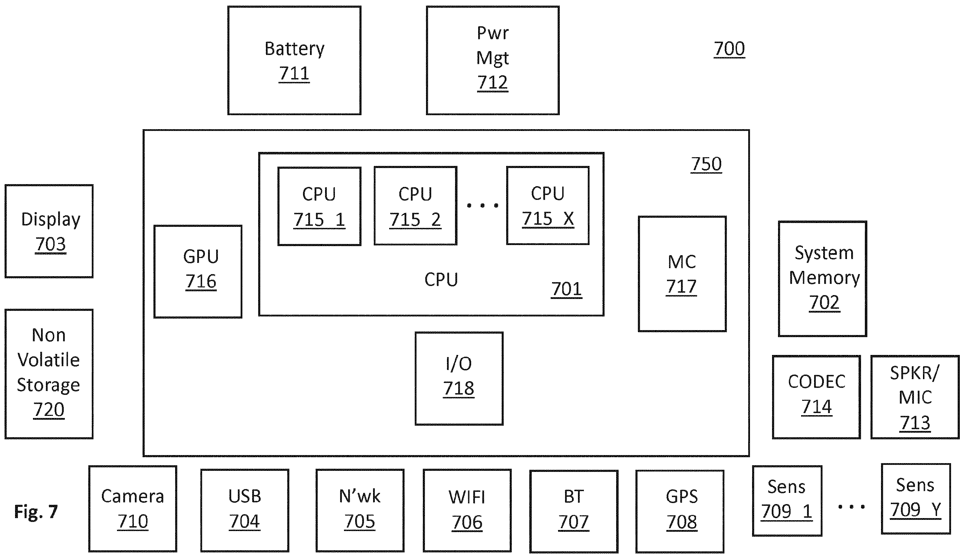

Fig. 7 provides an exemplary depiction of a computing system 700 (e.g., a smartphone, a tablet computer, a laptop computer, a desktop computer, a server computer, etc.). As observed in FIG. 7, the basic computing system 700 may include a central processing unit 701 (which may include, e.g., a plurality of general purpose processing cores 715_1 through 715_X) and a main memory controller 717 disposed on a multi-core processor or applications processor, system memory 702, a display 703 (e.g., touchscreen, flat-panel), a local wired point-to-point link (e.g., USB) interface 704, various network I/O functions 705 (such as an Ethernet interface and/or cellular modem subsystem), a wireless local area network (e.g., WiFi) interface 706, a wireless point-to-point link (e.g., Bluetooth) interface 707 and a Global Positioning System interface 708, various sensors 709_1 through 709_Y, one or more cameras 710, a battery 711, a power management control unit 712, a speaker and microphone 713 and an audio coder/decoder 714.

An applications processor or multi-core processor 750 may include one or more general purpose processing cores 715 within its CPU 701, one or more graphical processing units 716, a memory management function 717 (e.g., a memory controller) and an I/O control function 718. The general purpose processing cores 715 typically execute the operating system and application software of the computing system. The graphics processing unit 716 typically executes graphics intensive functions to, e.g., generate graphics information that is presented on the display 703. The memory control function 717 interfaces with the system memory 702 to write/read data to/from system memory 702. The power management control unit 712 generally controls the power consumption of the system 700.

Each of the touchscreen display 703, the communication interfaces 704-707, the GPS interface 708, the sensors 709, the camera(s) 710, and the speaker/microphone codec 713, 714 all can be viewed as various forms of I/O (input and/or output) relative to the overall computing system including, where appropriate, an integrated peripheral device as well (e.g., the one or more cameras 710). Depending on implementation, various ones of these I/O components may be integrated on the applications processor/multi-core processor 750 or may be located off the die or outside the package of the applications processor/multi-core processor 750.

The computing system also includes non-volatile storage 720 which may be the mass storage component of the system. Here, for example, the mass storage may be composed of one or more SSDs that are composed of FLASH memory chips whose multi-bit storage cells are programmed at different storage densities depending on SSD capacity utilization as described at length above.

Embodiments of the invention may include various processes as set forth above. The processes may be embodied in machine-executable instructions. The instructions can be used to cause a general-purpose or special-purpose processor to perform certain processes. Alternatively, these processes may be performed by specific/custom hardware components that contain hardwired logic circuitry or programmable logic circuitry (e.g., FPGA, PLD) for performing the processes, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, FLASH memory, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

In the foregoing specification, the invention has been described with reference to specific exemplary embodiments thereof. It will, however, be evident that various modifications and changes may be made thereto without departing from the broader spirit and scope of the invention as set forth in the appended claims. The specification and drawings are, accordingly, to be regarded in an illustrative rather than a restrictive sense.

## Claims

1. An apparatus, comprising:
a mass storage device controller to process first and second read requests received at an I/O interface of a mass storage device, the first read request including a first logical block address, the first read request to provide a first block stored within non volatile storage media of the mass storage device at the I/O interface, the first block identified by the first logical block address, the second read request including a second logical block address and specifying one or more bytes within a second block identified by the second block address and stored within the non volatile storage media, the second read request to provide the one or more bytes at the I/O interface.

2. The apparatus of claim 1 wherein the first and second read requests are different commands.

3. The apparatus of claim 1 wherein the first and second read requests are same commands with different input parameters.

4. The apparatus of claim 1 wherein the non volatile storage media comprises FLASH memory chips.

5. The apparatus of claim 1 wherein the one or more bytes comprises a single byte.

6. The apparatus of claim 1 wherein the controller is further to process a third read request, the third read request including a third logical block address and specifying a contiguous plurality of bytes that begin within a third block identified by the third block address and stored within the non volatile storage media, the plurality of bytes extending into a next block within the non volatile storage media, the third read request to provide the plurality of bytes at the I/O interface.

7. The apparatus of claim 1 wherein the controller is to process first and second write requests received at the I/O interface, the first write request including a third logical block address and a third block, the first write request to write the third block within the non volatile storage media, the second write request including a fourth logical block address and one or more bytes to be written within a fourth block identified by the fourth block address, the fourth write request to write the one or more byte within the fourth block within the non volatile storage media.

8. A machine readable storage medium comprising stored program code that when processed by one or more processors of a computing system cause the computing system to perform a method, comprising:
sending a first command to a mass storage device to read a block from the mass storage device;
writing a page having information within the block into a main memory;
sending a second command to the mass storage device to write only a byte of information from the page to the block stored within the mass storage device.

9. The machine readable medium of claim 8 wherein the method further comprises refraining from reading less than a second block of information from the mass storage device unless the second block's corresponding page is within the main memory.

10. The machine readable medium of claim 8 further comprising sending a third command to the mass storage device to read only a byte of information from the block within the mass storage device.

11. The machine readable medium of claim 8 wherein the first and second commands are different commands.

12. The machine readable medium of claim 8 wherein the first and second commands are same commands with different input parameters.

13. The machine readable medium of claim 12 wherein the input parameters specify an offset from a starting end of a block and a number of bytes.

14. An apparatus, comprising:
means for sending a first command to a mass storage device to read a block from the mass storage device;
means for writing a page having information within the block into a main memory;
means for sending a second command to the mass storage device to write only a byte of information from the page to the block stored within the mass storage device.

15. A computing system comprising the subject matter of any of claims 1 through 14.
